**Europäisches Patentamt**

**European Patent Office**

**Office européen des brevets**

(19)

(11) Publication number: **0 041 372**

**A2**

(12)

# EUROPEAN PATENT APPLICATION

(21) Application number: **81302366.0**

(22) Date of filing: **29.05.81**

(51) Int. Cl.³: **B 62 J 11/00**

(30) Priority: **30.05.80 JP 75788/80 U**
**17.06.80 JP 84974/80 U**

(43) Date of publication of application:
**09.12.81 Bulletin 81/49**

(84) Designated Contracting States:
**BE DE FR GB IT**

(71) Applicant: **SHIMANO INDUSTRIAL COMPANY LIMITED**
**77, 3-cho Oimatsu-cho Sakai-shi**
**Osaka(JP)**

(72) Inventor: **Shimano, Keizo**
**3-81, Midorigaoka-Minamimachi Sakai-shi**
**Osaka(JP)**

(74) Representative: **Szczuka, Jan Tymoteusz et al,**
**Cruikshank & Fairweather 19 Royal Exchange Square**
**Glasgow G1 3AE Scotland(GB)**

(54) **Cycle frame with bottle.**

(57) This invention relates to a cycle frame comprising; a frame body (1) comprising a plurality of interconnected members (11-17), comprising a head tube (11), a top tube (12) and a down tube (13) both connected to said head tube (11), a bottom bracket at the rear lower end of said down tube (13); a seat tube (15) connected at respective ends to said bottom bracket (14) and the rear end of the top tube (12); a rear fork (16) connected at one end at the junction of the seat tube (15) and the top tube (12), and a chain stay (17) connected at respective ends to said bottom bracket (14) and said rear fork (16). The frame body (1) has a first internal corner space (18) at the junction of said head tube (11) and the front end portions of said top tube (12) and down tube (13), and second to fifth internal corner spaces (19-22) at other junctions of the frame members. A bottle mounting means is provided for mounting a beverage bottle (2) on said frame body (1). Known such frames suffer from appreciable wind resistance leading to greater rider fatigue.

According to the present invention the bottle (2) is mounted in a said internal corner space (18-22) of said frame body (1), said bottle (2) having a body with a shape in side elevation formed for fitting closely in said corner space (18-22) between respective ones of said frame body members (11-17) at said corner space (18-22), and having a width in said side elevation less than the height or length of said bottle (2).

FIG. 1

## CYCLE FRAME WITH BOTTLE

This invention relates to a cycle frame comprising; a frame body comprising a plurality of interconnected members, said members comprising a head tube, a top tube and a down tube both connected to said head tube, a bottom bracket at the rear lower end of said down tube; a rear fork connected at one end at the junction of the seat tube and top tube, and a chain stay connected at respective ends to said bottom bracket and said rear fork; said frame body having a first internal corner space at the junction of said head tube and the front end portions of said top tube and down tube, a second internal corner space at the junction of said bottom bracket and the rear end portions of said down tube and the lower end portion of said seat tube, a third internal corner space at the junction of the rear end portion of said top tube and the upper end portion of said seat tube, a fourth internal corner space at the junction of the upper end portion of said seat tube and the upper end portion of said rear fork, and a firth internal corner space at the junction of said bottom bracket and the lower end portion of said seat tube and the front end portion of said chain stay; a beverage bottle; and bottle mounting means for mounting said beverage bottle on said frame body.

Conventionally, cycles for use in road racing or of the sports type are provided with beverage bottles (used for carrying water or other liquids to refresh the rider) mounted on the cycle frame body with the aid of suitable mounting means, the bottle being usually mounted on a lengthwise intermediate portion of the down tube of the frame.

During running of the cycle the abovementioned internal corner spaces tend to give rise to turbulence

and eddy currents in the surrounding air flow so that the cycle frame is subjected to an increased air resistance. Thus for example at the first or second corner spaces, air flows around the head tube or down tube on the leading side of the corner space passing rearwardly along both sides of said tube and then into the space, thereby causing an air eddy current therein which results in an air resistance against the running of the cycle. At the third corner space, air currents passing rearwardly alongside of the top tube and upwardly along the leading surface of the seat tube collide with each other to create turbulence which again results in increased air resistance against the cycle's running. In addition, at the fourth and fifth corner speces, air eddy currents also increase the air resistance.

Cycles for use in road racing or of the sports type, and provided with beverage bottles, are desirably constructed for riding at high speed with minimum effort and rider fatigue. This requires minimising of the air resistance to which the frame is subjected during the running of the cycle.

Previously proposed cycle frames have bottles mounted at an intermediate position on the down tube and the problem of air-resistance at the various corners of the frame has not been considered at all thereby resulting in limited high-speed running efficiency and unnecessarily high rider fatigue.

It is an object of the present invention to provide a cycle frame with a bottle and having a reduced air resistance.

According to the present invention a cycle frame comprises ; a frame body comprising a plurality of interconnected members, said members comprising a head tube, a top tube and a down tube both connected to said head tube, a bottom bracket at the rear lower end of said down tube; a seat tube connected at respective ends to said bottom bracket and the rear end of the top tube fork connected at one end at the junction of the seat tube and top tube, and a chain stay connected at respective ends to said bottom bracket and said rear fork, said frame body having a first internal corner space at the junction of said head tube and the front end portions of said top tube and down tube, a second internal corner space at the junction of said bottom bracket and the rear end portions of said down tube and the lower end portion of said seat tube, a third internal corner space at the junction of the rear end portion of said top tube and the upper end portion of said seat tube, a fourth internal corner space at the junction of the upper end portion of said seat tube and the upper end portion of said rear fork, and a fifth internal corner space at the junction of said bottom bracket and the lower end portion of said seat tube and the front end portion of said chain stay; a beverage bottle; and bottle mounting means for mounting said beverage bottle on said frame body; characterized in that said beverage bottle is mounted in a said internal corner space of said frame body, said bottle having a body with a shape in side elevation formed for fitting closely in said corner space between respective ones of said frame body members at said corner space, and having a width in said side elevation less than the height or length of said bottle.

In a frame of the present invention, with the bottle mounted at any of the frame corners, but preferably at the first or second corner, there is obtained a reduced air resistance. Desirably the bottle is generally trapezoidal or triangular in side elevation so as to fit more or less closely the inside shape of the frame corner, thereby substantially filling the corner space.

Naturally this shape may be modified somewhat e.g. the corners of a triangular shape could be chamfered to produce a shape which strictly speaking is hexagonal but is nevertheless generally triangular so as to more or less substantially fill a triangular corner space.

The bottle of the invention is mounted in an internal corner space of the frame so as to reduce the air resistance produced thereat, thereby reducing the overall air resistance of the frame. This advantageous result is moreover obtainable with a more or less simple bottle construction which can be easily and economically manufactured.

Further preferred features and advantages of the invention will appear from the following detailed description given by way of example of some preferred embodiments illustrated with reference to the accompanying drawings in which:

Fig. 1 is a side view of a cycle incorporating a first cycle frame of the invention;

Fig. 2 is a detail side view on an enlarged scale of the cycle frame of Fig. 1;

Fig. 3 is a transverse sectional view taken on the line III-III in Fig. 2;

Fig. 4 is a perspective view of the water-bottle alone of the frame of Fig. 1;

Fig. 5 is a side view of a cycle incorporating a second cycle frame of the invention;

Fig. 6 is a partially cutaway detail side view on an enlarged scale of the frame of Fig. 5;

Fig. 7 is an exploded perspective view of the water-bottle and mounting means therefor of the frame of Figs. 5 and 6; and

Figs. 8 to 10 are side views of a cycle using third, fourth, and fifth cycle frames of the invention, respectively.

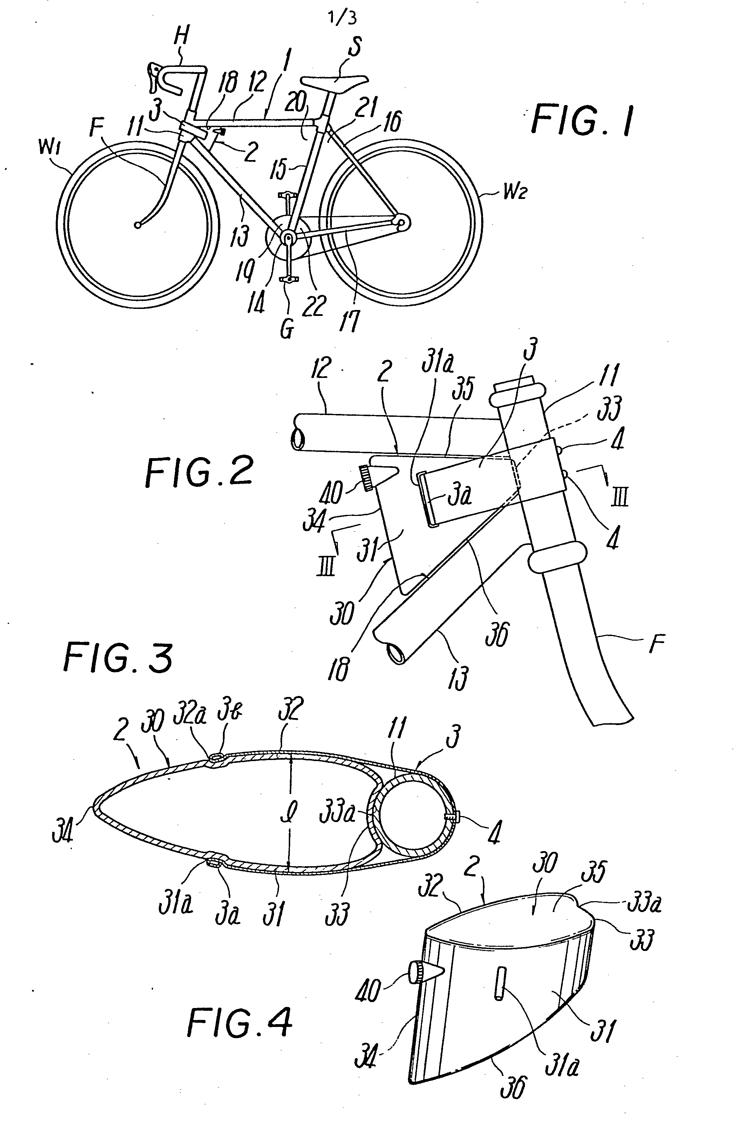

Fig. 1 shows a cycle frame of the invention comprising, in combination, a frame body 1 and a beverage bottle 2 usually referred to as a water-bottle. The cycle frame is generally of a type suitable for use in road racing or as a sports cycle and is provided with drop-type handlebars $\underline{H}$.

The frame body 1 comprises a plurality of interconnected members as follows: a head tube 11, a top tube 12 and a down tube 13 both connected to the head tube 11, a bottom bracket 14 at the rear lower end of the down tube 13, a seat tube 15 connected at respective ends to the bottom bracket 14 and the rear end of the top tube 12, a rear fork 16 connected at one end at the junction of the seat tube 15 and the top tube 12, and a chain stay 17 connected at respective ends to the bottom bracket 14 and the rear fork 16.

The head tube 11, as shown in Fig. 1, rotatably supports a handlebars $\underline{H}$ and front fork $\underline{F}$ assembly, the front fork $\underline{F}$ supporting a front wheel $\underline{W}_1$. The bottom bracket 14 rotatably supports a pedal crank $\underline{G}$ and the seat tube 15 supports a seat $\underline{S}$. A rear wheel $\underline{W}_2$ is supported at the junction of the back fork 16 and the chain stay 17.

The above described frame body 1 has a first internal corner space 18 at the junction of the head tube 11 with the front ends of the top tube 12 and down tube 13, a second corner space 19 at the junction of the bottom bracket 14 with the rear end of the down tube 13 and the lower end of the seat tube 15, a third corner space 20 at the junction of the rear end of the top tube 12 with the upper end portion of the seat tube 15, a fourth corner space 21 at the junction of the upper ends portion of the seat tube 15 with the upper end of the rear fork 16, and a fifth corner space 22 at the junction of the bottom bracket 14 with the lower end of the seat tube 15 and the front end of the chain stay 17. Naturally each said corner space will have an open side opposite the inner end or apex of the corner, which open side is not defined by any member. Nevertheless it will be recognised that the corner spaces of the above-described frame body are generally triangular or trapezoidal in appearance when viewed in side elevation. Specifically the corner space at the first corner space 18, as shown in Figs. 1 and 2, is generally trapezoidal, whilst the spaces at the second to fifth corner spaces 19 to 22, shown in Figs. 1 to 6, are generally triangular.

The water-bottle 2 comprises a body 30 with an opening and stopper 40 therefor. In use of the cycle, either when riding along or when stationary, a rider can remove the stopper 40 to drink water or other beverages contained in the body 30 from said bottle 2.

The water-bottle 2 when mounted in one of said corner spaces 18 to 22, substantially avoids the formation of air eddy currents and turbulence thereby resulting in a more streamlined airflow at said corner and reducing the overall air resistance of the frame.

The body 30 of the water-bottle 2 is shaped, in elevation, to fit the respective corner space more or less closely and has a limited thickness laterally of the cycle frame. Thus usually the bottle shape will be generally triangular or trapezoidal but it will of course be appreciated that the wall of the bottle on the open side of the corner space could be almost any shape including, for example, a lengthwise arcuate shape.

Figs. 1 and 2 show the water-bottle 2 mounted in the first corner space 18 of the frame body 1, the water-bottle 2 being substantially trapezoidal in side elevation and formed so as to fit substantially closely in the generally trapezoidal first corner space (see especially Fig. 2). The thickness $\underline{1}$ of the bottle (see Fig. 3) is slightly larger than the outer diameter of the head tube 11 as shown in Fig. 3.

The body 30 of the water-bottle 2 comprises substantially trapezoidal, though plano-convex, side walls 31 and 32, a front or leading wall 33 and rear or trailing wall 34 constituted by the merging of the side walls 31 and 32 at their rearward ends, and an upper wall 35 and a lower wall 36. When the water-bottle 2 is mounted in the first corner space 18, the front wall 33 is adjacent the rear surface of head tube 11, the upper wall 35 adjacent the lower surface of the top tube 12, and the lower wall 36 adjacent the upper surface of the down tube 13.

The front wall 33, as shown in Fig. 3, has a curved slightly concave recess 33a having a radius of curvature substantially equal to the outer diameter of the head tube 11 so as to be substantially complementary therewith and fit closely thereto. The rear wall 34 is also curved though in this case it is convex and has a rather smaller radius of curvature. The side walls 31 and 32 curve gently inwards in the rearward direction, at their rearward end portions and in the forward direction at their forward end portions, to form a relatively streamlined overall shape. Normally, in view of the usual manufacturing tolerances, slight gaps remain between the upper wall 35 and the top tube 12, and between the lower wall 36 and the down tube 13.

The upper and lower walls 35 and 36 also have curved slightly concave recesses with radii of curvature substantially equal to those of the outer diameters of the top tube 12 and down tube 13, respectively, to ensure a more or less close contact therewith. Although the smoothest air flows will usually be obtained with substantially no gap, a slight gap is in practice acceptable.

The water-bottle 2 is supported on the frame body 1 with the aid of a mounting means. This may be of conventional type in the form of a wire cage but conveniently, as shown in Figs 2 and 3, comprises a support 3 in the form of a generally U-shaped resiliently deformable channel formed from a metallic plate. At each of its free ends the plate is provided with a respective retaining portion 3a, 3b, the intermediate curved portion being secured to head tube 11 by screws 4. The side walls 31 and 32 of the water-bottle 2 have respective engagement grooves 31a and 32a for engagement with respective ones of said retaining portions 3a and 3b, so that the support 3 resiliently grips and retains the water-bottle 2 when said retaining portions 3a and 3b and engagement grooves 31a and 32a are interengaged.

When the water-bottle 2 occupies the corner space in the first corner space 18, the air flow therearound proceeds smoothly from the front surface of the head tube 11 rearwardly to the rear wall 34 alongside the side walls 31 and 32, so that no air eddy currents are formed at the rear of the rear wall 34 due to the streamlined contour of the water-bottle 2 and head-tube 11 combination.

As a result, the air resistance against the frame body 1 caused by air eddy currents is reduced enabling the rider to ride the cycle at high speed in a stable manner with reduced fatigue.

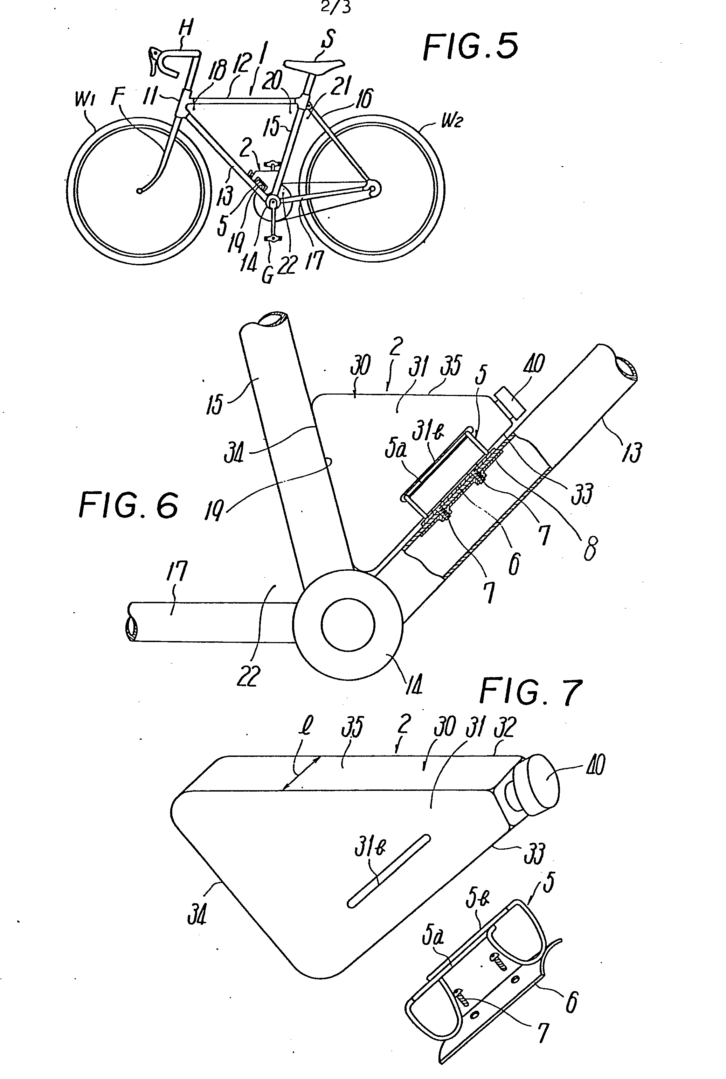

A second embodiment shown in Figs. 5 to 7 has the water-bottle 2 mounted in the second corner space 19.

In this case the water-bottle 2 is, as shown in Figs. 6 and 7, generally triangular in side elevation to fit more or less closely inside the second corner space 19 and has a thickness 1 substantially equal to the outer diameter of the down tube 13.

The body 30 of the water-bottle 2 in Figs. 6 and 7 comprises generally triangular side walls 31 and 32, and a front wall 33, a rear wall 34, and an upper wall 35, which interconnect the side walls 31 and 32, and has an opening and a stopper 40 therefor at a corner between the front wall 33 and the upper wall 35, at which the generally triangular side walls are chamfered – thereby producing what is in fact a tetragon i.e. a four-sided shape.

The second embodiment uses a support 5 in the form of a bottle cage formed from a resiliently deformable wire, as a mounting means for the water-bottle 2.

The support 5 comprises two elongate retainers 5a and 5b interconnected by arcuate members at respective ends, the retainers and arcuate members being formed of wire with suitable cranked portions. The arcuate members are secured to a fixing plate 6 by welding or the like, the fixing plate 6 being screwed to the down tube 13 by set-screws 7. At the side walls 31 and 32 of water-bottle 2 are provided grooves 31b engageable with respective ones of the retainers 5a and 5b, so that the retainers 5a and 5b resiliently grip the water-bottle 2 in the support 5. In addition, in Fig. 6, there is also shown a reinforcement plate 8 which locates inside the down tube 13 to clamp part of the down tube wall between said reinforcement plate 8 and the fixing plate 6, the reinforcement plate also having small bosses in which the set screws 7 screw threadedly engage. When the above-described water-bottle 2 is mounted in the second corner space 19, the front wall 33 is adjacent the rear surface of the down tube 13, the rear wall 34 adjacent the front surface of the seat tube 15, and the angular corner between the front wall 33 and the rear wall 34 adjacent the upper surface of the bottom bracket 14, the water-bottle 2 occupying the second corner space 19.

Accordingly, during running of the cycle, air flows around the front surface of the down tube 13 and then rearwardly along both side walls 31 and 32 of the bottle 2 and both sides of the seat tube 15. As a result, no air eddy currents occur at the second corner space 19 thereby reducing the overall air resistance of the whole frame body 1.

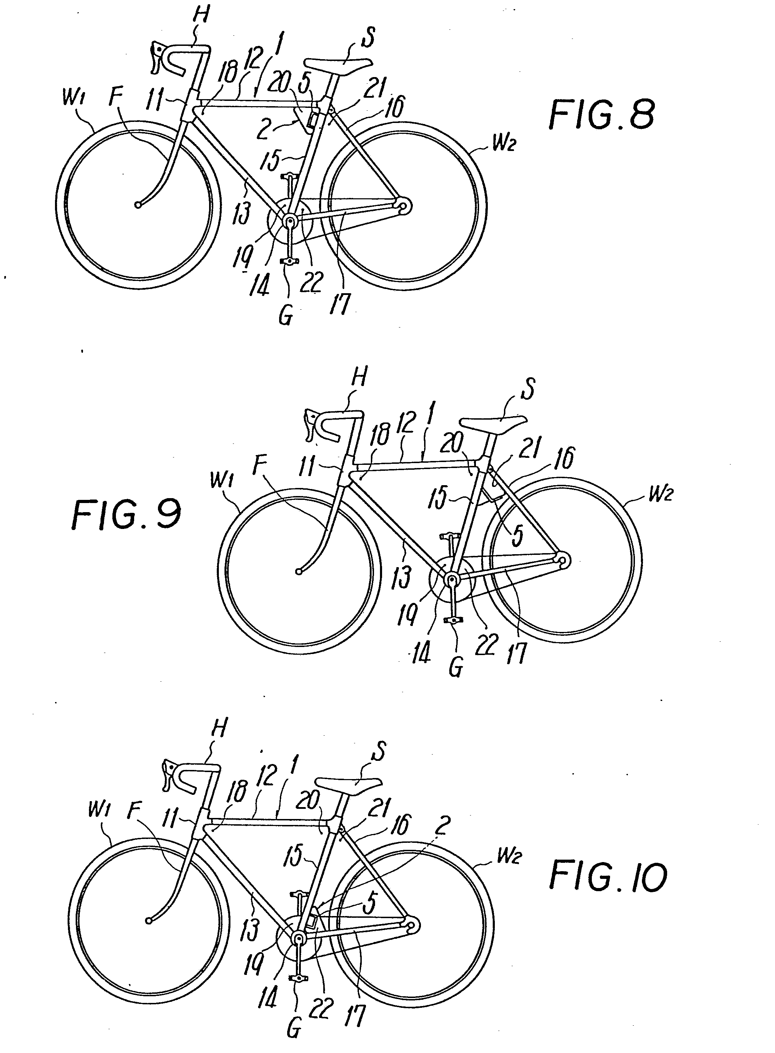

Alternatively, the water-bottle 2 may, as shown in Figs. 8 to 10, be mounted in any one of the remaining, third, fourth or fifth, corner spaces 20, 21, 22, thereby eliminating air eddy currents and turbulence thereat.

The water-bottle 2 in the first embodiment may alternatively be generally triangular in side elevation as shown in Figs. 6 and 7 and mounted in the first corner space 18. Also, the water-bottle 2 in the second embodiment may alternatively be generally trapezoidal in side elevation as shown in Fig. 2 and mounted in the second corner space 19.

Experiments have been carried out in a wind tunnel with the water-bottle 2 mounted in the second corner space 19 and the following results have been obtained:

In the experiment, the frame body is placed on a balancing measurement table within a wind tunnel, and a given air flow supplied from one side of the wind tunnel so that the movement of the frame body due to pressure exerted by wind, that is, the reaction force $\underline{D}$ against the air current, is measured while a pitot tube is used to measure air-speed as $\underline{V}$ m/sec, thereby deriving a coefficient $\underline{K}$ (g. sec$^2$/m$^2$) of air resistance from the air-speed $\underline{V}$ and the reaction force $\underline{D}$.

A formula $D=KV^2$ obtains in respect of the relationship between the reaction force $\underline{D}$, the air-speed $\underline{V}$, and the coefficient $\underline{K}$ of air resistance, the latter being obtained from measurements of $\underline{D}$ and $\underline{V}$.

The experiments have been carried out with a specimen (I) of a triangular water-bottle 2 and a specimen (II) of a trapezoidal one mounted in the second corner space 19 as shown in Figs. 6 and 7, as well as a specimen (III) of a conventional water-bottle mounted on an intermediate portion of the down tube 13, and also without a water-bottle at all (IV).

From the above, it has been found that the specimens I and II reduced the air resistance coefficient $\underline{K}$ by 10% or more in comparison with cases III and IV.

Furthermore, a triangular water-bottle is preferred for use in the second corner space 19, but a trapezoidal one is almost equally effective.

In addition, it is sufficient for a water-bottle 2 of the invention to have a shape when viewed in side elevation which fits more or less closely the corner space of a respective corner spaces 18 to 22, without being limited to a triangular or trapezoidal shape. Also it is possible to have some gaps between the water-bottle and one or more adjacent member of the frame body, whilst still preserving a degree of reduction in air resistance at the corner(s) concerned.

Naturally various diverse forms of mounting means for the water-bottle 2 other than those specifically illustrated may also be used.

## CLAIMS

1. A cycle frame comprising; a frame body (1) comprising a plurality of interconnected members (11-17), said members comprising a head tube (11), a top tube (12) and a down tube (13) both connected to said head tube (11), a bottom bracket at the rear lower end of said down tube (13); a seat tube (15) connected at respective ends to said bottom bracket (14) and the rear end of the top tube (12); a rear fork (16) connected at one end at the junction of the seat tube (15) and the top tube (12), and a chain stay (17) connected at respective ends to said bottom bracket (14) and said rear fork (16), said frame body (1) having a first internal corner space (18) at the junction of said head tube (11) and the front end portions of said top tube (12) and down tube (13), a second internal corner space (19) at the junction of said bottom bracket (14) and the rear end portions of said down tube (13) and the lower end portion of said seat tube (15), a third internal corner space (20) at the junction of the rear end portion of said top tube (12) and the upper end portion of said seat tube (15), a fourth internal corner space at the junction of the upper end portion of said seat tube (15) and the upper end portion of said rear fork (16), and a fifth internal corner space at the junction of said bottom bracket (14) and the lower end portion of said seat tube (15) and the front end portion of said chain stay (17); a beverage bottle (2); and bottle mounting means for mounting said beverage bottle on said frame body (1), characterized in that said beverage bottle (2) is mounted in a said internal corner space of said frame body (1), said bottle having a body with a shape in side elevation formed for fitting closely in said corner space between respective ones of said frame body members at said corner space, and having a width in said side elevation less than the height or length of said bottle.

2.    A cycle frame according to Claim 1, wherein said bottle (2) is mounted in the first corner space (18) of said frame body (1).

3.    A cycle frame according to Claim 2, wherein said bottle body shape in side elevation is generally trapezoidal and said bottle (2) has front and rear walls (33, 34) and upper and lower walls (35,36), said front wall (33) being disposed substantially adjacent said top tube (12) and down tube (13) respectively.

4.    A cycle frame according to Claim 2, wherein said bottle body shape in side elevation is generally triangular and said bottle (2) has  front and rear walls (33,34) and an upper wall (35), said front and upper walls (33,35) being disposed substantially adjacent said top tube (12) and said down tube (13), the opening (40) of said body being disposed opposite said head tube (11).

5.    A cycle frame according to Claim 3 or Claim 4, wherein said bottle (2) has a substantially streamlined shape at its rear end portion.

6.    A cycle frame according to any one of Claims 1 to 5 wherein said mounting means comprises a resiliently deformable retainer (3) formed and arranged for engagement of said bottle (2) with a resilient grip, and secured to said head tube (11).

7.    A cycle frame according to Claim 6, wherein said retainer comprises a spring plate (3).

8.    A cycle frame according to Claim 1, wherein said bottle is mounted in a said corner space selected from the second, third, fourth and fifth corner spaces (19- 22).

9.    A cycle frame according to Claim 8, wherein said bottle body shape is generally triangular in side elevation and said bottle (2) has a front wall (33) a rear wall (34) and an upper wall (35), one of said walls (33-35) facing in a direction away from the inner end of said corner space and the other two said walls (33-35) being disposed substantially adjacent respective ones of said frame body members (12-17) at said corner space.

10.    A cycle frame according to Claim 8, wherein said bottle body shape is generally trapezoidal in side elevation and said bottle has front and rear walls (33,34) and upper and lower walls (35,36) one of said walls (33-36) facing in a direction away from the inner end of said corner space, the opposite said wall (33-36) facing into said inner end, and the other two said walls (33-36) being disposed substantially adjacent respective ones of said frame body members (12017) at said corner space.

11.    A cycle frame as claimed in any one of the preceding claims wherein said bottle (2) has a concave wall (33a) substantially complementary to the adjacent wall of a respective said frame member (11) at said corner space (18).

12.    A cycle frame as claimed in any one of Claims 1 to 11 wherein said bottle has a thickness similar to the diameter of at least one of said respective body frame members at said corner space.

FIG. 1

FIG.2

FIG. 3

FIG.4

FIG.5

FIG. 6

FIG. 7

FIG.8

FIG.9

FIG.10